# EUROPEAN PATENT APPLICATION

(11) **EP 2 650 165 A2**
(43) Date of publication of application: **16.10.2013**
(21) Application number: 13162105.4
(22) Date of filing: 03.04.2013
(51) Int. Cl.: B60L 11/18

(54) **Low voltage warning method and device for vehicle secondary battery and vehicle provided with such device**

(30) Priority: 11.04.2012 CN 201210105246
(71) Applicant: Yamaha Hatsudoki Kabushiki Kaisha, Iwata-shi, Shizuoka 438-8501 (JP)
(72) Inventor: Fan, Kangchan, Chungli City (CN); Maehashi, Nobuhiko, Chungli City (CN)
(74) Representative: Grünecker, Kinkeldey, Stockmair & Schwanhäusser

(57) **Abstract**

A low voltage warning method for a vehicle secondary battery and a device for same are provided. The method includes a voltage detecting step of starting detecting the voltage of a secondary battery after a specific period of time, required for the voltage of the secondary battery to become substantially stable since a vehicle stops charging the secondary battery; a storing step of storing a detected voltage as a sample voltage Vs after the voltage of the secondary battery is detected; a comparing and judging step of comparing the sample voltage Vs with a predetermined threshold voltage Vth and judging whether the sample voltage Vs is less than or equal to the predetermined threshold voltage Vth; and an output step of outputting a warning when it is judged in the comparing and judging step that the sample voltage Vs is less than or equal to the predetermined threshold voltage Vth.

## Description

The present invention relates to a low voltage warning method for a vehicle secondary battery, a low voltage warning device for a vehicle secondary battery and a vehicle provided with such a device.

For a long time, vehicles, such as cars and motorcycles, have used secondary batteries, such as lead-acid batteries, to supply power. The so-called secondary battery is a battery, after discharging, that can be used again after being charged, which is also referred to as a storage battery or an electric accumulator. However, as the number of uses and the usage time increases, or after a long idle period, the charge storage capability of the secondary battery gradually degrades. When the charge storage capability of the battery degrades to an extent that the charge storage capacity thereof cannot supply a normal load, the end of life is announced (the definition of the end of life is different according to different scenarios where the battery is used, since the amount of electricity required to start the vehicle is large, "the end of life" in this specification of the present teaching refers to the time when the secondary battery cannot be used to start the engine of the vehicle, but the battery reaching "the end of life" may still be used to light up a vehicle lamp which requires a small amount of electricity).

Generally, when a vehicle is being started, a user pushes a starting switch to generate a trigger, and the battery of the vehicle supplies power to a starter motor to drive the engine so that the engine is started. Therefore, when the charge storage capacity of the battery is not sufficient, an awkward situation where the vehicle cannot be started may be caused. Therefore, it is necessary to detect the life status of the battery and issue a warning to the user when the battery approaches the end of life.

Generally speaking, the life of the secondary battery can be estimated by detecting an internal resistance value thereof, the capacity of the battery, or the voltage of the secondary battery. However, the internal resistance value needs to be detected by a specialized instrument, and the capacity of the secondary battery is influenced by many factors, including the structure of the battery (the quantity of cells, specifications of the battery and the size of a polar plate), the ambient temperature, the previous discharge depth of the battery, the self-discharge of the battery, the discharge current of the battery, the method for charging the battery, the discharge cutoff voltage, and the operating method of the battery. Since changing of the battery capacity of the secondary battery in a discharge process is not a linear function, it is more difficult to estimate the end of life of the battery. Therefore, among the above various methods for detecting the life status of the battery, the method for detecting the voltage of the secondary battery is simpler and easier.

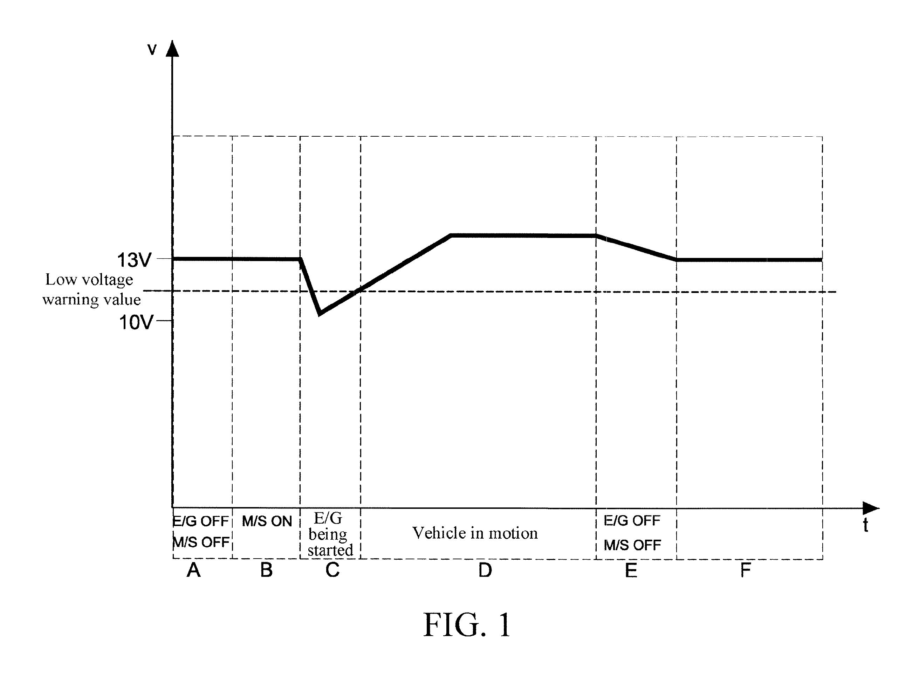

FIG. 1 is a characteristic curve diagram of the changes of the secondary battery voltage of a vehicle. Section A refers to the time that a main switch of the vehicle is turned off (M/S OFF) and an engine thereof is turned off (E/G OFF). At this moment, the voltage of the secondary battery is maintained at a fixed normal value (for example, 13 V). After the main switch of the vehicle is turned on (M/S ON), the voltage enters section B, and at this stage the voltage of the secondary battery remains substantially unchanged. Next, when the engine is being started (E/G being started), the voltage enters section C, and at this stage the voltage of the secondary battery sharply declines because of the action of the starter motor, and then rises gradually after the engine has been started. When the vehicle is in motion, the voltage enters section D, and at this stage, since the engine drives an electric generator to charge the secondary battery, the voltage of the secondary battery rises to a fixed value that is a little higher than the normal value, and then remains substantially unchanged. When the engine is turned off (E/G OFF) and the main switch is turned off (M/S OFF), the voltage enters section E, and at this stage, since the vehicle stops charging the secondary battery, the voltage of the secondary battery gradually declines to the normal value. When the voltage of the secondary battery reaches a substantially stable status, the voltage enters section F, and section F is actually section A.

In the conventional art, a technology for detecting a life status of a battery according to the voltage of the secondary battery already exists. In the technology, the voltage of the secondary battery is continually detected in a period of time starting from the time when the main switch of the vehicle is turned on (M/S ON) and ending at the time when the main switch is turned off (M/S OFF) (that is, from section B to section D in FIG. 1), and when the voltage of the secondary battery is less than a predetermined threshold value, a warning status is displayed to warn the user.

However, the voltage of the secondary battery of the vehicle is not at a constant value and changes along with different statuses of the vehicle.

Therefore, though the above conventional art may simply detect the voltage of the secondary battery and warn the user, as described above, the voltage of the secondary battery changes along with the statuses of the vehicle. In section C in FIG. 1, that is, when the engine is being started, the voltage of the secondary battery sharply declines and then gradually recovers after the engine has been started. When the battery does not reach the end of life, since the voltage of the secondary battery sharply declines below a predetermined low voltage warning value when the engine is being started, even if the battery does not reach the end of life, the warning that the end of life of the battery is approaching appears, which may make it impossible to correctly warn the user of the end of life of the battery.

It is an object of the present invention aims to provide a low voltage warning method for a vehicle secondary battery, a low voltage warning device for a vehicle secondary battery and a vehicle provided with such a device, which can detect a voltage in a simple, correct and reliable manner.

According to the present invention said object is solved by a low voltage warning method for a vehicle secondary battery having the features of independent claim 1. Moreover, said object is solved by a low voltage warning device for a vehicle secondary battery having the features of independent claim 8. Furthermore, said object is solved by a vehicle according to claim 15. Preferred embodiments are laid down in the dependent claims.

Specifically, a first aspect relates to a low voltage warning method for a vehicle secondary battery, which includes a voltage detecting step of starting detecting the voltage of a secondary battery after a specific period of time required for the voltage of secondary battery to become substantially stable since a vehicle stops charging the secondary battery; a storing step of storing a detected voltage as a sample voltage after the voltage of the secondary battery is detected; a comparing and judging step of comparing the sample voltage with a predetermined threshold voltage and judging whether the sample voltage is less than or equal to the predetermined threshold voltage; and an output step of outputting a warning when it is judged in the comparing and judging step that the sample voltage is less than or equal to the predetermined threshold voltage.

According to the above constitution, the detection is performed in a manner of detecting the voltage of the secondary battery, and the detection of the voltage of the secondary battery is started after the voltage of the secondary battery becomes substantially stable. Therefore, the detection may be performed in a simple and easy manner, and misjudging of the end of life of the battery may be prevented, thereby correctly and reliably detecting whether the voltage of the vehicle secondary battery is too low and issuing a warning.

A second aspect relates to the low voltage warning method according to the first aspect, where that the vehicle stops charging the secondary battery is achieved by turning off a main switch of the vehicle, and in the comparing and judging step, the comparing and judging are performed when the main switch of the vehicle is turned on, and the detection of the voltage of the secondary battery is stopped.

According to the above constitution, since the comparing and judging step is only performed when the main switch is turned on, current consumption in a standby mode may be reduced, thereby reducing the load of the battery.

A third aspect relates to the low voltage warning method according to the first aspect, where the specific period of time required for the secondary battery to become stable is a period of time starting from the time of stopping charging the secondary battery, and ending at the time when the voltage changing rate of the secondary battery is greater than or equal to -0.001 V/min.

According to the above constitution, the detection of the voltage may be started more accurately after the voltage of the secondary battery becomes stable, so as to prevent misjudging of the end of life of the battery.

A fourth aspect relates to the low voltage warning method according to the first aspect, where the specific period of time required for the secondary battery to become stable is approximately one hour.

According to the above constitution, the detection of the voltage may be started more accurately after the voltage of the secondary battery becomes stable, so as to prevent misjudging of the end of life of the battery.

A fifth aspect relates to the low voltage warning method according to any of the first aspect to the fourth aspect, where in the voltage detecting step, the voltage of the secondary battery is continually detected at a predetermined periodic interval after the detection of the voltage of the secondary battery is started.

According to the above constitution, since the voltage of the secondary battery is continually detected at a predetermined periodic interval, it may be ensured that when the main switch of the vehicle is turned on, the sample voltage used to be compared with the predetermined threshold voltage is the most recently detected voltage instead of a voltage detected long before, thereby correctly and reliably detecting whether the voltage of the vehicle secondary battery is too low and issuing a warning.

A sixth aspect relates to the low voltage warning method according to the fifth aspect, where the predetermined periodic interval is 30 minutes.

According to the above constitution, the voltage of the secondary battery may be detected at a preferred periodic interval so as to reduce the current consumption in the standby mode, thereby reducing the load of the battery, and meanwhile, take into account a frequent update to correctly and reliably detect whether the voltage of the vehicle secondary battery is too low and issue the warning.

A seventh aspect relates to the low voltage warning method according to the fifth aspect, where in the storing step, the sample voltage is updated to a newly detected voltage every time the voltage of the secondary battery is detected.

According to the above constitution, since the stored sample voltage is updated to the newly detected voltage every time the voltage of the secondary battery is detected, apart from taking into account the correct and reliable detection of whether the voltage of the vehicle secondary battery is too low and issuing of the warning, only one sample voltage needs to be stored at any time so that storage space may be saved.

The eighth aspect relates to the low voltage warning method according to any one of the first to the seventh aspects, where in the output step, the warning is displayed on a portion that originally displays the current time, and the displaying of the current time is re-displayed after a predetermined period of time for displaying the warning.

According to the above constitution, since the warning is displayed on the portion that originally displays the current time, an extra output portion does not need to be configured to output the warning, which may simplify the constitution and configuration space of the output portion.

A ninth aspect relates to a low voltage warning device for a vehicle secondary battery, which includes a voltage detecting portion, starting detecting the voltage of a secondary battery after a specific period of time required for the voltage of the secondary battery to become substantially stable since a vehicle stops charging the secondary battery; a storing portion, storing a voltage of the secondary battery detected by the voltage detecting portion and using the detected voltage as a sample voltage; a comparing and judging portion, comparing the sample voltage stored in the storing portion with a predetermined threshold voltage and judging whether the sample voltage is less than or equal to the predetermined threshold voltage; and an output portion, outputting a warning when the comparing and judging portion judges that the sample voltage is less than or equal to the predetermined threshold voltage.

According to the above constitution, the detection is performed in a manner of detecting the voltage of the secondary battery, and the detection of the voltage of the secondary battery is started when the voltage of the secondary battery becomes substantially stable. Therefore, the detection may be performed in a simple and easy manner, and misjudging of the end of life of the battery may be prevented, thereby correctly and reliably detecting whether the voltage of the vehicle secondary battery is too low and issuing a warning.

A tenth aspect relates to the low voltage warning device according to the ninth aspect, where that the vehicle stops charging the secondary battery is achieved by turning off a main switch of the vehicle, and the comparing and judging portion performs the comparing and judging when the main switch of the vehicle is turned on, and the detection of the voltage of the secondary battery is stopped.

According to the above constitution, since a comparing and judging step is only performed when the main switch is turned on, current consumption in a standby mode may be reduced, thereby reducing the load of the battery.

An eleventh aspect relates to the low voltage warning device according to the ninth aspect, where the specific period of time required for the secondary battery to become stable is a period of time starting from the time of stopping charging the secondary battery and ending at the time when the voltage changing rate of the secondary battery is greater than or equal to -0.001 V/min.

According to the above constitution, the detection of the voltage may be started more accurately after the voltage of the secondary battery becomes stable so as to prevent misjudging of the end of life of the battery.

A twelfth aspect relates to the low voltage warning device according to the ninth aspect, where the specific period of time required for the secondary battery to become stable is approximately one hour.

According to the above constitution, the detection of the voltage may be started more accurately after the voltage of the secondary battery becomes stable so as to prevent misjudging of the end of life of the battery.

A thirteenth aspect relates to the low voltage warning device according to any one of the ninth to the twelfth aspect, where the voltage detecting portion continually detects the voltage of the secondary battery at a predetermined periodic interval after the detection of the voltage of the secondary battery is started.

According to the above constitution, since the voltage of the secondary battery is continually detected at a predetermined periodic interval, it may be ensured that when the main switch of the vehicle is turned on, the sample voltage used to be compared with the predetermined threshold voltage is the most recently detected voltage instead of a voltage detected long before, thereby correctly and reliably detecting whether the voltage of the vehicle secondary battery is too low and issuing a warning.

A fourteenth aspect relates to the low voltage warning device according to the thirteenth aspect, where the predetermined periodic interval is 30 minutes.

According to the above constitution, the voltage of the secondary battery may be detected at a preferred periodic interval so as to reduce the current consumption in the standby mode, thereby reducing the load of the battery, and meanwhile, take into account a frequent update to correctly and reliably detect whether the voltage of the vehicle secondary battery is too low and issue the warning.

A fifteenth aspect relates to the low voltage warning device according to the fourteenth aspect, where the sample voltage stored in the storing portion is updated into a newly detected voltage every time the voltage of the secondary battery is detected.

According to the above constitution, since the stored sample voltage is updated into the newly detected voltage every time the voltage of the secondary battery is detected, apart from taking into account the correct and reliable detection of whether the voltage of the vehicle secondary battery is too low and issuing of the warning, only one sample voltage needs to be stored at any time so that storage space may be saved.

The sixteenth aspect relates to the low voltage warning device according to any one of the ninth to the fifteenth aspect, where the output portion displays the warning on a portion that originally displays current time, and the displaying of the current time is re-displayed after a predetermined period of time for displaying the warning.

According to the above constitution, since the warning is displayed on the portion that originally displays the current time, an extra output portion does not need to be configured to output the warning, which may simplify the constitution and configuration space of the output portion.

Hereinafter, the present invention is illustrated and explained by means of preferred embodiments in conjunction with the accompanying drawings. In the drawings wherein:
FIG. 1 is a characteristic curve diagram of changes of the voltage of a secondary battery of a vehicle;
FIG. 2 is a block diagram of a low voltage warning device for a secondary battery according to an embodiment;
FIG. 3A is a schematic diagram of a low voltage warning device for a secondary battery according to an embodiment;
FIG. 3B is a partially enlarged diagram of an instrument panel of a vehicle in FIG. 3A;
FIG. 3C is an enlarged diagram of an output portion in FIG. 3B;
FIG. 3D is an enlarged diagram of a reset button in FIG. 3A;
FIG. 4 is a flow chart of a low voltage warning method for a secondary battery according to an embodiment;
FIG. 5 is a schematic diagram of an output of a low voltage warning device according to an embodiment; and
FIG. 6 is a schematic diagram of various display patterns of a low voltage warning device according to an embodiment.

The preferred embodiments are illustrated in detail below with reference to the accompanying drawings.

### [Summary of a low voltage warning device]

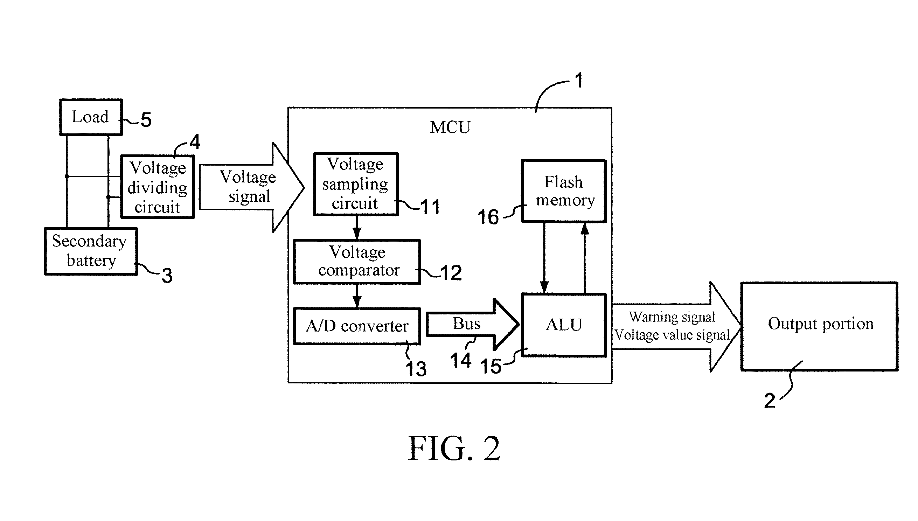

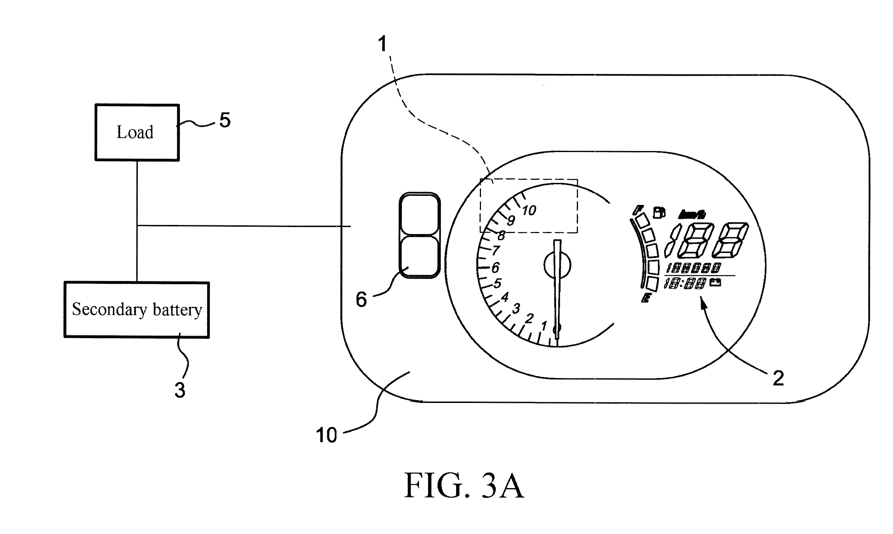

First refer to FIG. 2 and FIG. 3A. FIG. 2 is a block diagram of a low voltage warning device for a secondary battery according to an embodiment, and FIG. 3A is a schematic diagram of a low voltage warning device for a secondary battery according to an embodiment.

The low voltage warning device for a secondary battery of an embodiment mainly includes a voltage dividing circuit 4, a Micro Control Unit (MCU) 1 and an output portion 2. The MCU 1 includes a voltage sampling circuit 11, a voltage comparator 12, an analog/digital converter (A/D converter) 13, a bus 14, an Arithmetic Logic Unit (ALU) 15 and a flash memory 16. The output portion 2 may be a liquid crystal display, but the present teaching is not limited thereto. The output portion 2 may also be an element that may issue a warning to the user, such as a light-emitting diode (LED) display, or a speaker.

Hardware actions of the low voltage warning device for a secondary battery of the embodiment are illustrated in the following.

Firstly, the voltage of a secondary battery 3 is normally about 12 V. However, the MCU 1 cannot accept such a high input voltage, so the MCU 1 obtains the voltage of the secondary battery 3 via the voltage dividing circuit 4. After entering the MCU 1, a low voltage signal produced through voltage dividing by the voltage dividing circuit 4 is sampled by the voltage sampling circuit 11 with respect to the voltage, and is compared with a preset reference voltage value by the voltage comparator 12. After that, an analog voltage signal is converted into a digital voltage signal by the A/D converter 13. At this stage, the ALU 15 obtains, via the internal bus 14, the converted digital voltage signal (that is, a sample voltage Vs in a low voltage warning processing flow described below), and stores the converted digital voltage signal in the flash memory 16. A predetermined threshold voltage Vth is also stored in the flash memory. The predetermined threshold voltage Vth is set as a voltage value denoting that a warning signal needs to be displayed since the secondary battery 3 approaches the end of life, and is generally set at a value below 13 V. In this embodiment, the predetermined threshold voltage Vth is set at 12 V. The ALU 15 is responsible for performing the low voltage warning processing flow described below, and according to a calculation result, controls the output portion 2 to issue a warning to the user or display the most recently detected voltage value of the secondary battery 3. In this embodiment, the output portion 2 adopts a liquid crystal display. As shown in FIG. 3A, in this embodiment, a time displaying portion of an instrument panel 10 of a vehicle is also used as the output portion 2.

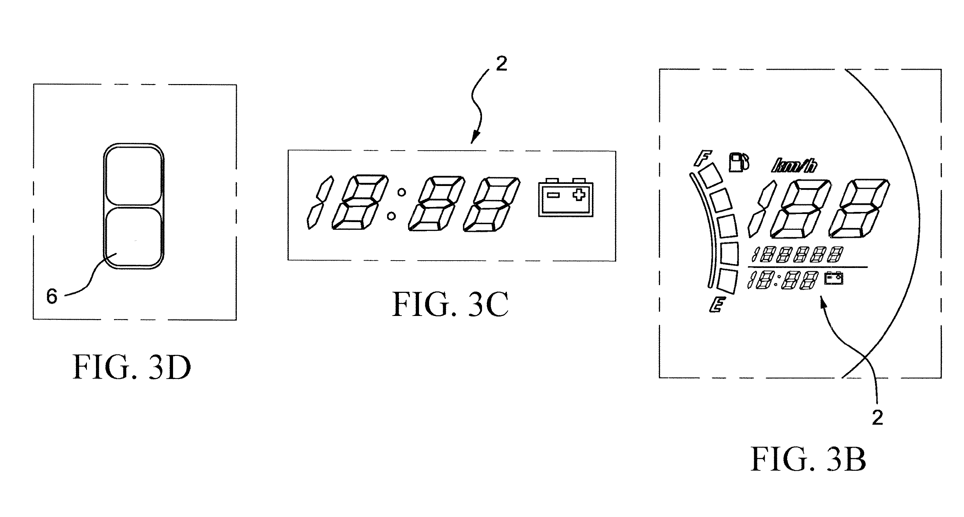

Continue to refer to FIG. 3B to FIG. 3D. FIG. 3B is a partially enlarged diagram of the instrument panel 10 of the vehicle in FIG. 3A. FIG. 3C is an enlarged diagram of the output portion 2 in FIG. 3B. FIG. 3D is an enlarged diagram of a reset button 6 in FIG. 3A.

As shown in FIG. 3B and FIG. 3C, in order to make the instrument panel 10 of the vehicle concisely display, in the embodiment, a portion of the instrument panel 10 of the vehicle, which originally displays time, is used as the output portion 2 to display a low voltage warning. However, the present teaching is not limited thereto. The portion of the instrument panel 10 of the vehicle, which originally displays time, may not be used, and an output portion 2, used for displaying the low voltage warning, may be additionally configured on the instrument panel 10 of the vehicle.

In an embodiment, as shown in FIG. 3D, the instrument panel of the vehicle is provided with the reset button 6. In the embodiment, the reset button 6 is used by the user for the purpose of displaying the voltage value of the secondary battery 3. For example, when the user wants to know the most recently detected sample voltage Vs of the secondary battery 3, the user may push the reset button 6 after a main switch (not shown) of the vehicle is turned on, and the sample voltage Vs is displayed on the output portion 2.

### [Low voltage warning processing flow]

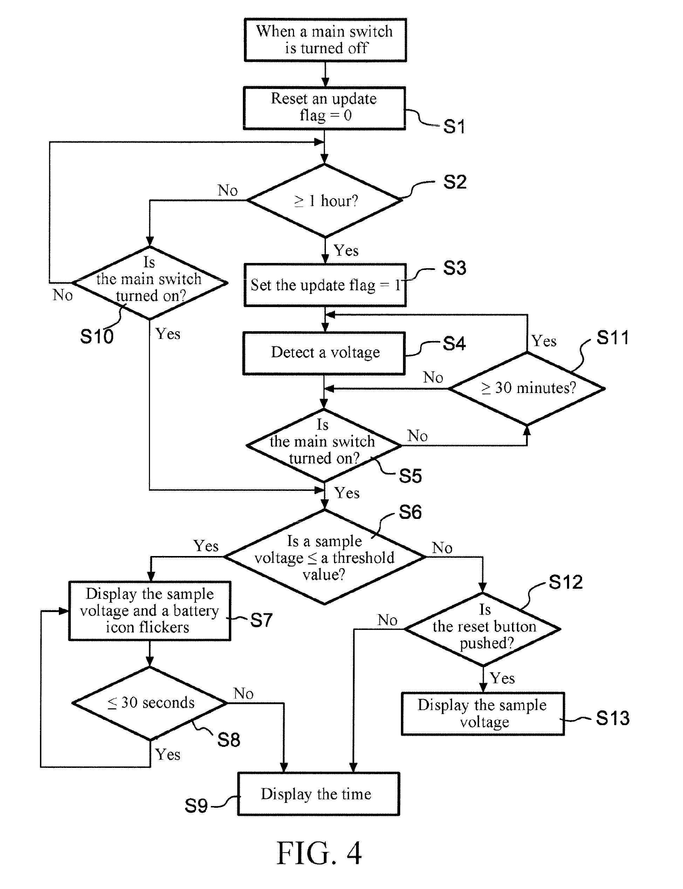

Next, refer to FIG. 4. FIG. 4 is a flow chart showing a low voltage warning method for a secondary battery according to an embodiment.

According to the present teaching, after a vehicle stops charging a secondary battery (that is, after a main switch is turned off in the embodiment), the voltage of a secondary battery 3 gradually declines to a normal value and then enters section F in FIG. 1. After the voltage of the secondary battery 3 reaches a stable status, the voltage of the secondary battery 3 is sampled. After that, when the main switch of the vehicle is turned on, and according to the detected voltage of the secondary battery 3, it is judged as to whether or not to display a warning. Specific steps of the embodiment are shown in the flow chart in FIG. 4. Low voltage warning judging processing from Step S1 to Step S13 is started when the main switch of the vehicle is turned off (a condition for starting the processing).

Generally speaking, when the engine of the vehicle is running, the engine drives an electric generator to run, and the electric generator charges the battery. Therefore, when the main switch of the vehicle is turned off, the engine stops running and, consequently, the electric generator stops running and also stops charging the secondary battery 3. Therefore, according to the present teaching, the time when the main switch of the vehicle is turned off may be adopted as the time when the vehicle stops charging the secondary battery, but the present teaching is not limited thereto. The time when the engine of the vehicle is turned off may also be used as the time when the vehicle stops charging the secondary battery.

Firstly, in Step S1, an update flag stored in a flash memory 16 is reset to 0, which denotes that a sample voltage Vs stored in the flash memory 16 has not yet been updated. Next, in Step S2, it is judged whether a specific period of time has passed since the main switch of the vehicle has been turned off. This is the method, in this embodiment, for judging whether the voltage of the secondary battery 3 reaches a substantially stable status. In this embodiment, the specific period of time is set to one hour.

According to the present teaching, the detection of the voltage is started in section F in FIG. 1, that is, when the voltage of the secondary battery 3 reaches a substantially stable status. Therefore, considering the type of the secondary battery 3 used in the vehicle, and according to a beforehand obtained characteristic curve diagram of changes of the secondary battery 3, a normal period of time required for the voltage of the used secondary battery 3 to decline to a stable value after the main switch is turned off is obtained, so as to appropriately set the specific period of time that is judged whether it has passed since the main switch of the vehicle was turned off in Step S2, thereby achieving the effect of the present teaching. Therefore, the present teaching is not limited to the one hour in this embodiment. The specific period of time may also be appropriately set to, for example, 30 minutes, or two hours according to the characteristic curve diagram of changes of the secondary battery 3, or a period of time starting from the time when the main switch of the vehicle is turned off and ending at the time when a voltage changing rate of the secondary battery 3 is greater than or equal to a predetermined value, for example, -0.001 V/min, is used as the period of time for judging whether the voltage of the secondary battery 3 reaches a stable status.

In Step S2 of the embodiment, if it is judged that a period of time that has passed since the main switch of the vehicle was turned off is greater than or equal to one hour (Step S2, yes), the procedure proceeds to Step S3. If the period of time that has passed since the main switch of the vehicle was turned off is less than one hour (Step S2, no), the procedure proceeds to Step S10. In Step S10, it is judged whether the main switch of the vehicle is turned on, and if the main switch is turned on (Step S10, yes), the procedure proceeds to Step S6, and if the main switch is not turned on (Step S10, no), the procedure returns to Step S2.

In Step S3, the update flag stored in the flash memory 16 is first set to 1, which denotes that the sample voltage Vs has updated. Then, the procedure proceeds to Step S4. In Step S4, the voltage of the secondary battery 3 is detected as the sample voltage Vs, and the sample voltage Vs is stored in the flash memory 16. When the sample voltage Vs is stored in the flash memory 16, the sample voltage Vs that was last recorded may be overwritten so that only one sample voltage Vs is maintained within the flash memory 16.

Next, in Step S5, it is judged whether the main switch of the vehicle is turned on, and if the main switch is turned on (Step S5, yes), the procedure proceeds to Step S6, and if the main switch is not turned on (Step S5, no), the procedure proceeds to Step S11 to judge whether more than 30 minutes has passed since the last detection of the voltage of the secondary battery. If more than 30 minutes has passed (Step S11, yes), the procedure returns to Step S4 to detect the voltage and update the sample voltage Vs once again. That is, in this embodiment, a sampling frequency of once every 30 minutes is used to update the sample voltage Vs. However, the sampling frequency is not limited thereto, and may also be once every 10 minutes, once every 20 minutes or once every hour. If the period of time that has passed since the last detection of the voltage of the secondary battery is less than 30 minutes (Step S11, no), the procedure continues to return to Step S5 to judge whether the main switch of the vehicle is turned on.

In this embodiment, the period for detecting the voltage of the secondary battery 3 starts from the time that is one hour after the main switch of the vehicle is turned off, and ends when the main switch of the vehicle is turned on. In other words, voltage sampling of the secondary battery 3 is stopped after the main switch is turned on.

Specifically, in Step S5 and Step S10, if it is determined that the main switch of the vehicle is turned on, the detection of the voltage of the secondary battery 3 is stopped, and the procedure proceeds to Step S6 to judge whether the detected sample voltage Vs is less than or equal to the predetermined threshold voltage Vth. The predetermined threshold voltage Vth is stored in the flash memory 16 in advance. In Step S6, the sample voltage Vs stored in the flash memory16 is compared with the predetermined threshold voltage Vth to judge whether the sample voltage Vs is less than or equal to the predetermined threshold voltage Vth. If the sample voltage Vs is less than or equal to the threshold voltage Vth (Step S6, yes), the procedure outputs a warning (Step S7), and if the sample voltage Vs is greater than the threshold voltage Vth (Step S6, no), the procedure proceeds to Step S12.

In Step S7, since the detected voltage of the secondary battery 3 is less than or equal to the predetermined threshold voltage Vth, which denotes that the end of life of the secondary battery 3 is approaching, a warning is issued to remind the user. The warning method may be presentation through a visual display method, and the warning may also be performed by, for example, issuing the sound of "beep" several times. In this embodiment, a flickering battery icon is displayed as the warning, and as described above, it is on a portion that originally displays time that the flickering battery icon and the detected threshold voltage Vth are displayed. Next, the procedure proceeds to Step S8 of judging whether a time period for displaying the warning exceeds 30 seconds. If the period of time for displaying the warning is less than or equal to 30 seconds (Step S8, yes), then the procedure returns to Step S7 to continue displaying the warning. If the period of time for displaying the warning exceeds 30 seconds (Step S8, no), the procedure switches back to display the time and stop displaying the warning (Step S9). In this embodiment, the period of time for displaying the warning is 30 seconds, but the present teaching is not limited thereto, and the displaying time period of the warning may be, for example, 15 seconds or one minute.

The above is the main low voltage warning processing flow. However, considering that when the warning is not displayed, the user may still want to know a most recently measured sample voltage Vs so as to take the status of the secondary battery 3 of the vehicle under control at any time, the manner of pushing the reset button 6 to read the sample voltage Vs stored in the flash memory 16 is provided for the user, and the flow is illustrated in the following.

When it is judged in Step S6 that the sample voltage Vs of the secondary battery 3 exceeds a threshold value, the procedure proceeds to Step S12. In Step S12, it is judged whether the reset button 6 is pushed. If the reset button 6 is pushed (Step S12, yes), then the sample voltage Vs stored in the flash memory 16 is displayed. In this embodiment, the sample voltage Vs is displayed on the portion that originally displays time. If the reset button 6 is not pushed once again, the status of displaying the sample voltage Vs is maintained. When the reset button 6 is pushed once again, the displaying portion returns to the original status of displaying the time. In addition, it may also be set that when the sample voltage Vs is already displayed for a certain period of time, for example, 3 seconds, the displaying of time is automatically re-displayed.

### [Low voltage warning display pattern]

As may be known according to the foregoing low voltage warning processing flow, in an embodiment, the low voltage warning and the sample voltage Vs are displayed in different situations. In this embodiment, the user is notified, through different display patterns, of situations corresponding to results represented by the displayed content. Various display patterns in the embodiment are illustrated in the following.

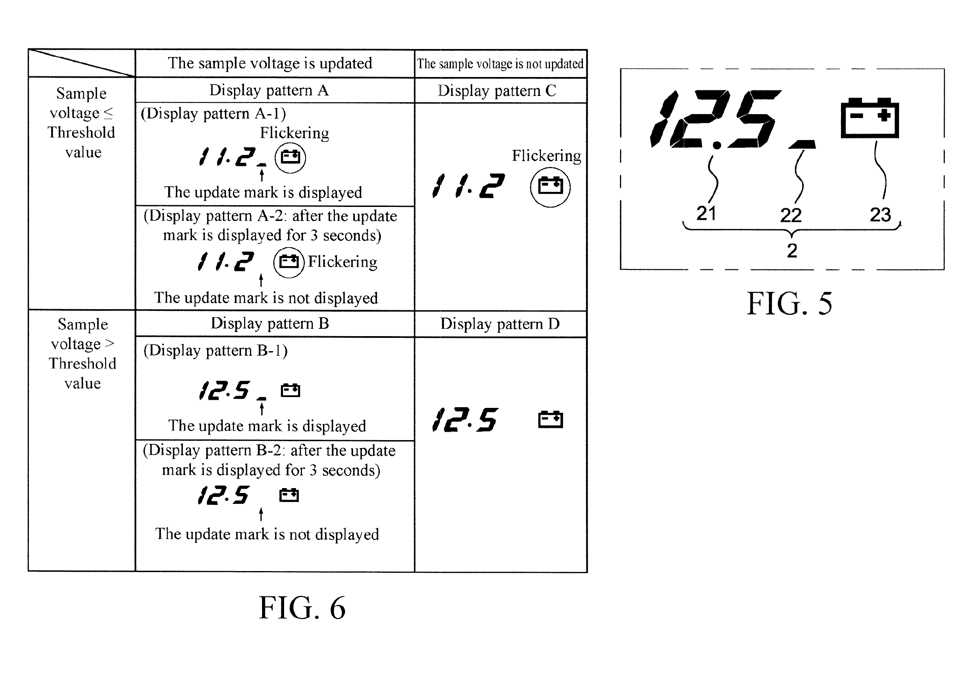

Refer to FIG. 5. FIG. 5 is a schematic diagram of an output of a low voltage warning device according to an embodiment.

As shown in FIG. 5, an output portion 2 in the embodiment further includes a sample voltage displaying portion 21, an update mark displaying portion 22, and a battery icon displaying portion 23. The sample voltage displaying portion 21 is used for displaying a sample voltage Vs of a secondary battery 3 recorded in a flash memory 16. That is, in Step S6, when it is judged that the sample voltage Vs is less than or equal to a predetermined threshold value (Step S6, yes), or when a user pushes a reset button 6 in Step S12 to proceed to Step S13, the sample voltage displaying portion 21 displays the sample voltage Vs of the secondary battery 3 recorded in the flash memory 16. In this embodiment, the sample voltage displaying portion 21 uses a two-digit portion that originally displays the hour portion of the time, a colon portion and the tens digit portion of the minute portion to display the sample voltage Vs of a two-digit amount added with a first digit after the decimal point.

The update mark displaying portion 22 decides, according to an update flag stored in the flash memory 16, whether to display an update mark. If the update flag is 0, which denotes that the sample voltage Vs has not been updated, the update mark is not displayed. If the update flag is 1, which denotes that the sample voltage Vs is up to date, the update mark is displayed, and then after 3 seconds, the update mark is not displayed. Further, in this embodiment, the update mark displaying portion 22 uses a portion that originally displays the ones digit of the minute of the time to display a bottom line as the update mark.

The battery icon displaying portion 23 further displays a battery icon on the right of the portion that originally displays the time. That is, in Step S6, when it is judged that the sample voltage Vs is less than or equal to the predetermined threshold value (Step S6, yes), in Step S7, the battery icon displaying portion 23 displays the battery icon, for example, in a flickering manner so as to issue a warning to remind the user that the end of life of the secondary battery 3 is approaching. If the sample voltage Vs is greater than the predetermined threshold value, when the user pushes the reset button 6 in Step S12 to proceed to Step S13, in addition to that the sample voltage Vs of the secondary battery 3 recorded in the flash memory 16 is displayed, the battery icon may be displayed on the battery icon displaying portion 23 in a normal manner (for example, not flickering), so as to notify the user that the secondary battery 3 currently does not reach the end of life. In another aspect, when the user does not push the reset button 6 in Step S12, the battery icon displaying portion 23 does not display the battery icon.

Next, refer to FIG. 6. FIG. 6 is a schematic diagram of various display patterns of a low voltage warning device according to an embodiment.

When the low voltage warning device of the embodiment judges that a sample voltage Vs stored in a flash memory 16 is less than or equal to a predetermined threshold value with a main switch of a vehicle turned on, or when a reset button 6 is pushed by a user, that is, when the procedure proceeds to Step S7 or Step S13 in FIG. 4, an ALU 15 controls an output portion 2 to display the sample voltage Vs recorded in the flash memory 16, and if required by the situation, display a low voltage warning.

As shown in FIG. 6, an output pattern of the output portion 2 depends on whether the sample voltage Vs is greater than the threshold value and whether the sample voltage Vs is up to date.

When an update flag stored in the flash memory is 1, it denotes that the sample voltage Vs stored in the flash memory 16 is updated, and if the sample voltage Vs is less than or equal to the threshold value, the output portion 2 outputs display pattern A. From the beginning of display pattern A, a sample voltage displaying portion 21 displays the sample voltage Vs, an update mark displaying portion 22 displays an update mark, and a battery icon displaying portion 23 displays a battery icon in a flickering manner so as to issue a warning to the user (display pattern A-1). After a specific period of time, for example, 3 seconds, the update mark disappears. At this time, the sample voltage displaying portion 21 still displays the sample voltage Vs, the update mark displaying portion 22 does not display the update mark, and the battery icon displaying portion 23 still displays the battery icon in a flickering manner (display pattern A-2).

Likewise, when the update flag stored in the flash memory is 1, which denotes that the sample voltage Vs stored in the flash memory 16 is up to date, and if the sample voltage Vs is greater than the threshold value, then the output portion 2 outputs display pattern B. From the beginning of display pattern B, the sample voltage displaying portion 21 displays the sample voltage Vs, the update mark displaying portion 22 displays the update mark, and the battery icon displaying portion 23 displays the battery icon in a normal (not flickering ) manner (display pattern B-1). After a specific period of time, for example, after 3 seconds, the update mark goes out. At this time, the sample voltage displaying portion 21 still displays the sample voltage Vs, the update mark displaying portion 22 does not display the update mark, and the battery icon displaying portion 23 still displays the battery icon in a normal manner (display pattern B-2).

When the update flag stored in the flash memory is 0, which denotes that the sample voltage Vs stored in the flash memory 16 is not up to date, and if the sample voltage Vs is less than or equal to the threshold value, then the output portion 2 outputs display pattern C. In display pattern C, the sample voltage displaying portion 21 displays the sample voltage Vs, the update mark displaying portion 22 does not display the update mark, and the battery icon displaying portion 23 displays the battery icon in a flickering manner so as to issue a warning to the user.

Likewise, when the update flag stored in the flash memory is 0, which denotes that the sample voltage Vs stored in the flash memory 16 is not up to date, and if the sample voltage Vs is greater than the threshold value, then the output portion 2 outputs display pattern D. In display pattern D, the sample voltage displaying portion 21 displays the sample voltage Vs, the update mark displaying portion 22 does not display the update mark, and the battery icon displaying portion 23 displays the battery icon in a normal (for example, not flickering) manner.

The above are the low voltage warning display patterns in the embodiment, but the warning manner is not limited thereto, and the manner of using colors to display and distinguish a low voltage or a voltage that is not low, or a sound reminding manner may be adopted to perform the warning.

### List of Reference Numerals:

| | |
|---|---|
| 1 | MCU |
| 2 | Output portion |
| 3 | Secondary battery |
| 4 | Voltage dividing circuit |
| 5 | Load |
| 6 | Reset button |
| 11 | Voltage sampling circuit |
| 12 | Voltage comparator |
| 13 | A/D converter |
| 14 | Bus |
| 15 | ALU |
| 16 | Flash memory |
| 21 | Sample voltage displaying portion |
| 22 | Update mark displaying portion |
| 23 | Battery icon displaying portion |
| Vs | Sample voltage |
| Vth | Threshold voltage |

## Claims

1. A low voltage warning method for a vehicle secondary battery (3), comprising
a voltage detecting step of starting detecting the voltage of a secondary battery (3) after a specific period of time required for the voltage of the secondary battery (3) to become substantially stable since a vehicle stops charging the secondary battery (3); a storing step of storing a detected voltage as a sample voltage (Vs) after the voltage of the secondary battery (3) is detected;
a comparing and judging step of comparing the sample voltage (Vs) with a predetermined threshold voltage (Vth) and judging whether the sample voltage (Vs) is less than or equal to the predetermined threshold voltage (Vth); and
an output step of outputting a warning when it is judged in the comparing and judging step that the sample voltage (Vs) is less than or equal to the predetermined threshold voltage (Vth).

2. A low voltage warning method according to claim 1, wherein that the vehicle stops charging the secondary battery (3) is achieved by turning off a main switch of the vehicle; and
in the comparing and judging step, the comparing and judging are performed when the main switch of the vehicle is turned on, and the detection of the voltage of the secondary battery (3) is stopped.

3. A low voltage warning method according to claim 1 or 2, wherein the specific period of time required for the secondary battery (3) to become stable is a period of time from the time of stopping charging the secondary battery (3) to the time when a voltage changing rate of the secondary battery (3) is greater than or equal to -0.001 V/min, or
the specific period of time required for the secondary battery (3) to become stable is within a range of 30 minutes to two hours, preferably approximately 30 minutes or one hour or two hours.

4. A low voltage warning method according to any one of claims 1 to 4, wherein in the voltage detecting step, the voltage of the secondary battery (3) is continually detected at a predetermined periodic interval after the detection of the voltage of the secondary battery (3) is started.

5. A low voltage warning method according to claim 4, wherein the predetermined periodic interval is within a range of 10 minutes to one hour, preferably 10 minutes or 20 minutes or 30 minutes or one hour.

6. A low voltage warning method according to any one of claims 1 to 5, wherein in the storing step, the sample voltage (Vs) is updated into a newly detected voltage every time the voltage of the secondary battery (3) is detected.

7. A low voltage warning method according to any one of claims 1 to 6, wherein in the output step, a warning is displayed on a portion that originally displays the current time, and the displaying of the current time is re-displayed after a predetermined period of time for displaying the warning.

8. A low voltage warning device for a vehicle secondary battery (3), in particular adapted to perform the method according to at least one of the claims 1 to 7, comprising:
a voltage detecting portion, for starting detecting the voltage of a secondary battery (3) after a specific period of time required for the voltage of the secondary battery (3) to become substantially stable since a vehicle stops charging the secondary battery (3);
a storing portion, for storing a voltage of the secondary battery (3) detected by the voltage detecting portion, and using the detected voltage as a sample voltage (Vs);
a comparing and judging portion, for comparing the sample voltage (Vs) stored in the storing portion with a predetermined threshold voltage (Vth) and judging whether the sample voltage (Vs) is less than or equal to the predetermined threshold voltage (Vth); and
an output portion (2), for outputting a warning when the comparing and judging portion judges that the sample voltage (Vs) is less than or equal to the predetermined threshold voltage (Vth).

9. A low voltage warning device according to claim 8, wherein that the vehicle stops charging the secondary battery (3) is achieved by turning off a main switch of the vehicle; and
the comparing and judging portion is adapted to perform comparing and judging when the main switch of the vehicle is turned on, and the detection of the voltage of the secondary battery (3) is stopped.

10. A low voltage warning device according to claim 8 or 9, wherein the specific period of time required for the secondary battery (3) to become stable is a period of time from the time of stopping charging the secondary battery (3) to the time when a voltage changing rate of the secondary battery (3) is greater than or equal to -0.001 V/min, or the specific period of time required for the secondary battery (3) to become stable is within a range of 30 minutes to two hours, preferably approximately 30 minutes or one hour or two hours.

11. A low voltage warning device according to any one of claims 8 to 10, wherein the voltage detecting portion continuously detects the voltage of the secondary battery (3) at a predetermined periodic interval after the detection of the voltage of the secondary battery (3) is started.

12. A low voltage warning device according to claim 11, wherein the predetermined periodic interval is within a range of 10 minutes to one hour, preferably 10 minutes or 20 minutes or 30 minutes or one hour.

13. A low voltage warning device according to any one of claims 8 to 12, wherein the sample voltage (Vs) stored in the storing portion is updated into a newly detected voltage every time the voltage of the secondary battery (3) is detected.

14. A low voltage warning device according to any one of claims 8 to 13, wherein the output portion (2) displays a warning on a portion that originally displays the current time, and the displaying of the current time is re-displayed after a predetermined period of time for displaying the warning.

15. Vehicle, in particular car or motorcycle, provided with a low voltage warning device for a vehicle secondary battery (3) according to at least one of the claims 8 to 14.
